Europäisches Patentamt

European Patent Office

Office européen des brevets

(19)

(11) Numéro de publication : **0 055 661 B1**

# (12) FASCICULE DE BREVET EUROPÉEN

(45) Date de publication du fascicule du brevet :
**09.10.85**

(21) Numéro de dépôt : **81402039.2**

(22) Date de dépôt : **21.12.81**

(51) Int. Cl.⁴ : **H 02 M 7/04**

(54) **Dispositif de commande des moyens de régulation dans un convertisseur électrique alternatif continu, de forte puissance.**

(30) Priorité : **30.12.80 FR 8027769**

(43) Date de publication de la demande :
**07.07.82 Bulletin 82/27**

(45) Mention de la délivrance du brevet :
**09.10.85 Bulletin 85/41**

(84) Etats contractants désignés :
**DE FR GB IT NL**

(56) Documents cités :
**FR-A- 2 079 268**
**FR-A- 2 395 544**
**GB-A- 1 443 065**
**US-A- 3 518 527**
**US-A- 4 074 345**

(73) Titulaire : **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur : **Andre, Gérard**
**94 Avenue Gambetta**
**F-75020 Paris (FR)**

Jouve, 18, rue St-Denis, 75001 Paris, France

## Description

La présente invention concerne un dispositif de commande des moyens de régulation dans un convertisseur électrique alternatif-continu, de forte puissance. Ces convertisseurs sont généralement utilisés pour alimenter des ordinateurs de puissance.

On sait que la production d'une tension continue régulée, à forte puissance (10 kW par exemple) impose l'usage de moyens de régulation comprenant notamment un pont redresseur à thyristors ou un pont de type mixte, utilisant à la fois des thyristors et des diodes. Ces ponts sont le plus souvent de type triphasé et la commande de régulation est effectuée en contrôlant l'angle de retard à l'amorçage des thyristors. Il est nécessaire, pour permettre le fonctionnement du système alimenté (un ordinateur par exemple), de définir un seuil minimal de la tension de sortie régulée du convertisseur ; il est également nécessaire de prévoir une réserve d'énergie qui permet de garantir cette valeur minimale de la tension de sortie en cas de coupure partielle du réseau alternatif qui alimente le convertisseur. Généralement, la réserve d'énergie prend place en aval des moyens de régulation, à la sortie d'un filtre comprenant par exemple un self associée à un condensateur ; cette réserve d'énergie est réalisée à l'aide d'un nombre plus ou moins important de condensateurs.

Lors d'une coupure ou d'une microcoupure du réseau alternatif alimentant les moyens de régulation du convertisseur, ces condensateurs, qui ont accumulé de l'énergie électrique avant l'apparition de cette coupure ou de cette microcoupure, se déchargent dans le système alimenté par le convertisseur. La recharge de ces condensateurs, lors du rétablissement du réseau alternatif après une coupure ou une microcoupure impose à l'ensemble des composants du convertisseur des contraintes anormales et notamment, une circulation de courants de forte valeur qui peuvent conduire à la disjonction du convertisseur et par conséquent, à l'arrêt du système alimenté par celui-ci. On sait que la commande de régulation dans les convertisseurs alternatif-continu, est réalisée à partir d'une tension d'erreur fournie par un comparateur qui reçoit d'une part, au moins une partie de la tension de sortie des moyens de stockage d'énergie et d'autre part, une tension continue de référence. Le comparateur possède sa propre alimentation et sa propre réserve d'énergie, qui est généralement supérieure en durée, à la réserve d'énergie en sortie du convertisseur. Lorsque le réseau subit une coupure, la tension en sortie des moyens de stockage d'énergie décroît en fonction des caractéristiques du système alimenté et de la valeur de la réserve d'énergie. Elle peut atteindre un seuil minimal et, lorsque le comparateur constate, en sortie des moyens de stockage, une tension insuffisante, il élabore un signal d'erreur qui est appliqué aux moyens de régulation et qui est destiné à accroître la tension de sortie des moyens de stockage. Ceci est alors sans effet puisque le réseau est coupé. Dans la plupart des cas, la différence entre la tension de sortie des moyens de stockage et la tension de référence est telle que la dynamique de fonctionnement du comparateur est dépassée et que celui-ci est saturé. Lors du rétablissement du réseau alternatif qui alimente le convertisseur, le comparateur se trouve à saturation ou, dans le meilleur des cas, en limite de fonctionnement et les moyens de régulation fournisssent une tension importante qui ne décroîtra que lorsque la tension de sortie des moyens de stockage aura atteint une valeur normale ; après stabilisation de la boucle de régulation. Les moyens de filtrage sont alors soumis à un échelon de tension très important et le courant résultant peut conduire rapidement la self de ces moyens de filtrage, à saturation ; or, cette dernière ne peut être surdimensionnée pour des raisons économiques, son volume étant en effet proportionnel à $LI^2$ (L désignant l'inductance de la self et I le courant qui la traverse). Il en résulte qu'il circule, au moment du rétablissement du réseau alternatif à l'entrée du convertisseur, un courant très important dans les composants du convertisseur ; ce courant peut provoquer la destruction de ces composants ou, au mieux, la rupture de fusibles de protection situés généralement entre le réseau alternatif et l'entrée du convertisseur. L'invention a pour but de remédier à ces inconvénients et notamment de réaliser un dispositif de commande des moyens de régulation dans un convertisseur alternatif-continu de forte puissance, ce dispositif permettant d'éviter que lors d'une coupure, puis du rétablissement du réseau alternatif alimentant le convertisseur, un courant trop important circule dans les composants de celui-ci.

Le document FR-A-2 395 544 décrit un circuit de régulation d'une alimentation en courant électrique redressé. La régulation se fait au moyen d'un amplificateur différentiel qui compare la tension redressée à une tension de référence. Cette tension de référence est obtenue aux bornes de diodes Zener montées en parallèle avec une résistance et une capacité et alimentés à partir de la tension du réseau. Ce circuit permet un démarrage doux des diodes Zener.

L'invention a pour but d'améliorer le fonctionnement d'un dispositif du genre décrit précédemment et propose des moyens permettant d'adapter les caractéristiques du circuit de régulation aux caractéristiques du circuit de redressement et de charge.

Plus précisément l'invention concerne un dispositif de commande des moyens de régulation dans un convertisseur électrique alternatif-continu de forte puissance, ce convertisseur comprenant, outre les moyens de régulation reliés au réseau électrique alternatif, des moyens de filtrage dont une entrée est reliée à une sortie des moyens de régulation, des moyens de stockage d'énergie électrique reliés à une sortie des moyens de filtrage, la tension régulée utile étant disponible en sortie de ces moyens de stockage, le dispositif de commande comprenant un comparateur de commande de régulation dont une entrée est reliée à la sortie des moyens de stockage et dont une autre entrée de référence reçoit une tension de référence qui présente une valeur dite « nominale » lorsque le convertisseur est normalement alimenté par le réseau, la sortie de ce comparateur de commande fournissant un signal d'erreur appliqué à une entrée de commande des moyens de régulation, ledit dispositif comprenant des moyens de référence pour fournir au comparateur de commande une tension de référence sensible aux variations de tension du réseau et augmentant progressivement au moment du rétablissement du réseau après une coupure caractérisé en ce que ces moyens de référence sont agencés de manière qu'à l'instant dudit rétablissement la tension à l'entrée des moyens de filtrage, soit au plus égale à la tension en sortie des moyens de stockage et en ce que ces moyens sont constitués par des moyens pour détecter une valeur limite x de la tension du réseau électrique, pour laquelle les moyens de régulation étant au maximum de conduction, la tension moyenne de sortie de ces moyens de régulation correspond à une tension minimum utile de sortie du convertisseur, au-dessous de laquelle le convertisseur n'est plus utilisable, après une coupure du réseau, des moyens pour abaisser la tension de référence à une valeur prédéterminée z pendant la durée d'une coupure, puis pour élever progressivement la valeur de cette tension de référence depuis sa valeur prédéterminée z jusqu'à sa valeur nominale, au moment du rétablissement du réseau.

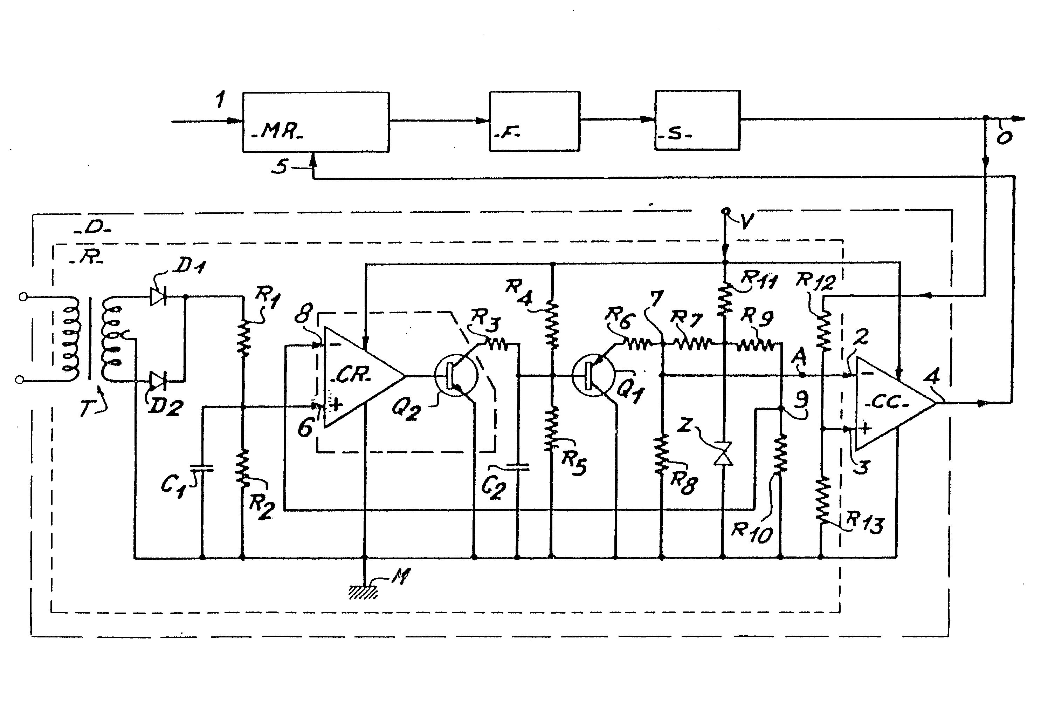

D'autres caractéristiques et avantages de l'invention ressortiront encore de la description qui va suivre, donnée en référence à la figure unique annexée, qui représente schématiquement un dispositif conforme à l'invention, et qui permet de commander les moyens de régulation d'un convertisseur électrique alternatif-continu.

Sur la figure, le dispositif de commande conforme à l'invention est représenté en D. Il permet de commander les moyens de régulation MR d'un convertisseur électrique alternatif-continu ; ces moyens de régulation sont reliés par leur entrée 1, au réseau alternatif (non représenté) et ils sont généralement de type triphasé. Le convertisseur comprend également des moyens de filtrage F constitués par une self associée à un condensateur (non représenté) et des moyens de stockage S de la tension régulée et filtrée. La sortie de ce convertisseur est représentée en O ; cette sortie est la sortie utile qui permet d'alimenter un système tel qu'un ordinateur par exemple. La sortie O du convertisseur est, de manière connue, reliée à une entrée 3 d'un comparateur de commande de régulation CC appartenant au dispositif de commande D. Une autre entrée 2 de ce comparateur reçoit une tension de référence, qui sera définie plus loin en détail. La sortie 4 du comparateur CC, est reliée à une entrée 5 de commande des moyens de régulation MR. Dans les convertisseurs du type connu, la sortie 4 du comparateur de commande CC fournit une tension d'erreur résultant de la comparaison de la tension de sortie des moyens de stockage S et d'une tension fixe de référence ; cette tension d'erreur permet de commander des moyens de contrôle (non représentés) qui agissent sur l'angle de retard à l'amorçage des thyristors des moyens de régulation MR. La tension de référence présente une valeur qui est qualifiée de nominale, lorsque le convertisseur est normalement alimenté par le réseau. Le dispositif D de commande des moyens de régulation comprend en outre, selon l'invention, des moyens de référence R qui permettent de fournir une tension de référence réglable au comparateur de commande CC, de manière qu'à l'instant du rétablissement du réseau, après une coupure, la tension à l'entrée des moyens de filtrage F, soit au plus égale à la tension en sortie des moyens de stockage S.

Comme on le verra plus loin en détail, les moyens de référence R sont constitués de manière à détecter une valeur limite x de la tension du réseau électrique, pour laquelle les moyens de régulation MR étant au maximum de conduction, la tension moyenne de sortie de ces moyens de régulation correspond à une tension minimum utile de sortie du convertisseur, au-dessous de laquelle le convertisseur n'est plus utilisable, après une coupure du réseau, pour alimenter un système. Les moyens de référence R comprennent également des moyens qui permettent d'abaisser la tension de référence appliquée à une entrée du comparateur de commande CC, au-dessous d'une valeur prédéterminée z pendant la durée d'une coupure, puis pour élever progressivement la valeur de cette tension de référence, depuis la valeur prédéterminée z, jusqu'à sa valeur nominale, au moment du rétablissement du réseau.

Les moyens qui permettent de détecter la valeur limite x de la tension du réseau qui alimente le convertisseur et pour laquelle les moyens de régulation MR étant au maximum de conduction, la tension moyenne de sortie de ces moyens de régulation correspondent à une tension minimum utile de sortie du convertisseur, comprennent un comparateur de référence CR dont une première entrée 6 reçoit la tension redressée du réseau à travers un premier pont diviseur à résistances $R_1$, $R_2$. Cette tension redressée peut être bien entendu fournie, de manière connue, par un transformateur T dont le primaire est relié au réseau et dont le secondaire alimente un pont redresseur à diodes $D_1$, $D_2$. Les moyens qui permettent de déterminer la valeur limite x de la tension du réseau comprennent aussi une source électrique V de tension continue d'alimentation du comparateur de référence CR et un transistor $Q_1$ fonctionnant, soit à l'état bloqué, soit à l'état saturé, selon la tension appliquée à sa base, par la sortie du comparateur de référence CR. La base de ce transistor $Q_1$ est reliée à la sortie en « collecteur ouvert » est en réalité un transistor $Q_2$ dont la base reçoit le signal de sortie du comparateur et dont l'émetteur est relié à la masse de référence M, tandis que le collecteur est relié à la base du transistor $Q_1$, par une résistance $R_3$. En réalité, les fabricants de composants enferment ce transistor dans le même boîtier que celui qui renferme le comparateur. L'émetteur du transistor $Q_1$ qui passe rapidement de l'état bloqué à l'état saturé et progressivement de l'état saturé à l'état bloqué, est relié d'une part à la tension de référence Z, et d'autre part, à l'entrée de référence 2 du comparateur de commande CC. D'autres circuits incluant notamment des résistances qui seront décrites plus loin en détail, sont aussi connectés sur l'émetteur du transistor $Q_1$. Le collecteur de ce transistor est relié à la masse de référence M. Le point commun (9) aux résistances $R_9$, $R_{10}$, d'un deuxième pont diviseur, est relié à une deuxième entrée 8 du comparateur de référence CR. Comme on le verra plus loin en détail, la valeur des résistances $R_1$, $R_2$, $R_9$, $R_{10}$, des premier et deuxième ponts diviseurs, permet de déterminer la valeur de la limite x de la tension d'alimentation du réseau pour laquelle la tension moyenne de sortie des moyens de régulation correspond à une tension minimum utile de sortie de convertisseur. Lorsque la tension du réseau qui alimente le convertisseur est supérieure à cette valeur limite x, la sortie du comparateur de référence CR est à un niveau haut par rapport à la masse de référence M et le transistor $Q_1$ est bloqué. L'entrée de référence 2 du comparateur de commande CC est reliée à l'émetteur du transistor $Q_1$ par l'intermédiaire d'un troisième pont diviseur à deux résistances $R_7$, $R_8$. Les bornes communes de ces résistances, désignées par la référence unique 7, sont reliées à l'émetteur du transistor $Q_1$ et à l'entrée de référence 2 du comparateur de commande CC. Les autres bornes de ces résistances sont reliées respectivement à la source de tension continue V et à la masse de référence M. Les moyens de détection de la valeur limite x de la tension du réseau alimentant le convertisseur comprennent aussi des moyens de commande qui seront décrits plus loin en détail, de la tension base-collecteur du transistor $Q_1$ ; ces moyens de commande permettent de diminuer la valeur du courant qui traverse la résistance $R_8$, lorsque la tension du réseau devient inférieure à la valeur limite x ; ils permettent également d'augmenter progressivement la valeur au courant circulant dans cette résistance $R_8$, lorsque la tension du réseau devient supérieure à la valeur limite x, jusqu'à ce que la tension de référence atteigne la valeur nominale mentionnée plus haut.

Les moyens de commande du transistor $Q_1$ comprennent un condensateur $C_2$, connecté entre la masse de référence M et la base du transistor $Q_1$ et une première résistance $R_3$ qui relie la sortie en « collecteur ouvert » du comparateur CR, avec la base du transistor $Q_1$. Une deuxième résistance $R_6$ relie l'émetteur du transistor $Q_1$ avec les bornes communes 7 des résistances $R_7$, $R_8$ du troisième pont diviseur. Le condensateur $C_2$ se décharge rapidement dans le collecteur ouvert, à travers la première résistance $R_3$, lorsque la tension du réseau devient inférieure à la valeur limite x ; il en résulte que le courant circulant dans la résistance $R_8$ du troisième pont diviseur, est dévié dans la deuxième résistance $R_6$, abaissant ainsi le potentiel du point A et donc la valeur de la tension de référence appliquée à l'entrée 2 du comparateur de commande CC. Cet état persiste tant que la valeur de la tension du réseau est inférieure à la valeur limite x. Au contraire, lorsque le réseau est rétabli et que la valeur de sa tension moyenne devient supérieure à la valeur limite x, le condensateur $C_2$ se recharge progressivement, de sorte que la valeur du courant dévié dans la deuxième résistance $R_6$ diminue, puisque le potentiel de la base du transistor $Q_1$ augmente. Il en résulte que cette diminution de la valeur du courant dans la deuxième résistance $R_6$, s'accompagne d'une augmentation de la valeur du courant dans la résistance $R_8$ du troisième pont diviseur.

Cette augmentation s'accompagne d'un accroissement du potentiel A et donc d'un accroissement de la tension de référence appliquée à l'entrée de référence 2 du comparateur CC. La sortie O des moyens de stockage d'énergie S, est reliée à une entrée du comparateur de commande de régulation CC, par l'intermédiaire d'un quatrième pont diviseur $R_{12}$, $R_{13}$, qui permet d'appliquer à cette entrée une fraction de la tension de sortie des moyens de stockage. La borne de la résistance $R_7$ du troisième pont diviseur $R_7$, $R_8$, qui est reliée à la source de tension continue V, est reliée à cette source par l'intermédiaire d'une résistance $R_{11}$ ; cette borne est d'autre part reliée à la masse de référence M par l'intermédiaire d'une diode de Zener Z qui permet de fixer la valeur nominale de la tension de référence, lorsque la tension du réseau, en fonctionnement normal, est supérieure à la valeur limite x. Enfin, la base du transistor $Q_1$ est reliée respectivement à la source de tension continue V et à la masse de référence M par l'intermédiaire de deux résistances $R_4$, $R_5$, qui permettent de fixer la durée de la charge du condensateur $C_2$. Un condensateur de découplage $C_1$ est connecté en parallèle avec la résistance $R_2$ du premier pont diviseur.

De manière plus précise, le dispositif fonctionne de la manière suivante : le choix des valeurs des résistances $R_1$, $R_2$ et $R_9$, $R_{10}$, permet de déterminer la valeur limite x de la tension du réseau, pour laquelle la sortie du comparateur de référence CR, qui est monté en « collecteur ouvert », change de niveau.

La sortie de ce comparateur est à un niveau haut, lorsque le réseau est normal, c'est-à-dire lorsque sa tension est supérieure à la valeur limite x. Dans ce cas, le transistor $Q_1$ est bloqué et la tension de référence qui apparaît au point A est fixée à une valeur z, par le rapport des valeurs des résistances $R_7$, $R_8$ du troisième pont diviseur. Cette tension de référence au point A est comparée à travers le quatrième pont diviseur $R_{12}$, $R_{13}$, à une fraction de la tension de sortie des moyens de stockage S, par le comparateur de commande CC.

Lorsque la tension moyenne du secteur qui alimente le convertisseur descend en dessous de la valeur limite x, la sortie du comparateur de référence CR passe à un niveau bas et le condensateur $C_2$ se décharge à travers la résistance $R_3$ de faible valeur, et à travers le transistor $Q_2$ de la sortie en collecteur ouvert du comparateur de référence CR. La tension sur l'émetteur du transistor $Q_1$ suit à la tension émetteur-base près, la tension aux bornes du condensateur $C_2$.

Il en résulte que la résistance $R_6$ dévie une partie du courant qui traversait le troisième pont diviseur $R_7$, $R_8$, à travers le transistor $Q_1$. Il en résulte que le potentiel du point A diminue et que cette diminution persiste tant que la valeur de la tension du réseau est inférieure à la valeur limite x.

Lorsque la valeur de la tension du réseau qui alimente le convertisseur, devient supérieure à la valeur limite x, la tension de sortie du comparateur de référence CR passe à un niveau haut et le condensateur $C_2$ se recharge progressivement par l'intermédiaire de la résistance $R_4$. La durée de ce rechargement est fonction de la constante de temps du circuit constitué par le condensateur $C_2$ et par la résistance équivalente aux résistances $R_4$ et $R_5$ montées en parallèle. Le courant dans la résistance $R_6$ diminue progressivement puisque le condensateur $C_2$ se chargeant, le potentiel de la base du transistor $Q_1$ augmente. Il en résulte que le courant dans la résistance $R_6$ diminue jusqu'à une valeur nulle, correspondant au blocage du transistor $Q_1$. Pendant ce temps, le potentiel du point A remonte à sa valeur nominale, fixée par la tension de la diode Zener Z et le rapport d'atténuation du pont constitué par les résistances $R_7$ et $R_8$. A cet instant, la tension de sortie des moyens de stockage S correspond à la tension nominale de sortie du convertisseur, lorsque celui-ci est alimenté normalement par le réseau alternatif.

Il est bien évident que dans le dispositif qui vient d'être décrit, les moyens utilisés auraient pu être remplacés par des moyens équivalents, sans sortir du cadre de l'invention telle qu'elle est définie dans les revendications.

**Revendications**

1. Dispositif de commande des moyens de régulation (MR) dans un convertisseur électrique alternatif-continu de forte puissance, ce convertisseur comprenant, outre les moyens de régulation reliés au réseau électrique alternatif, des moyens de filtrage (F) dont une entrée est reliée à une sortie des moyens de régulation (MR), des moyens (S) de stockage d'énergie électrique reliés à une sortie des moyens de filtrage (F), la tension régulée utile étant disponible en sortie de ces moyens de stockage (S), le dispositif de commande (D) comprenant un comparateur de commande de régulation (CC) dont une entrée est reliée à la sortie des moyens de stockage (S) et dont une autre entrée de référence reçoit une tension de référence qui présente une valeur dite « nominale » lorsque le convertisseur est normalement alimenté par le réseau, la sortie de ce comparateur de commande (CC) fournissant un signal d'erreur appliqué à une entrée de commande des moyens de régulation (MR), ledit dispositif comprenant des moyens de référence (R) pour fournir au comparateur de commande (CC) une tension de référence sensible aux variations de tension de référence sensible aux variations de tension du réseau et augmentant progressivement au moment du rétablissement du réseau après une coupure caractérisé en ce que ces moyens de référence (R) sont agencés de manière qu'à l'instant dudit rétablissement la tension à l'entrée des moyens de filtrage (F) soit au plus égale à la tension en sortie des moyens de stockage (S) et en ce que ces moyens (R) sont constitués par des moyens pour détecter une valeur limite x de la tension du réseau électrique, pour laquelle les moyens de régulation (MR) étant au maximum de conduction, la tension moyenne de sortie de ces moyens de régulation correspond à une tension minimum utile de sortie du convertisseur, au-dessous de laquelle le convertisseur n'est plus utilisable, après une coupure du réseau, des moyens pour abaisser la tension de référence à une valeur prédéterminée z pendant la durée d'une coupure, puis pour élever progressivement la valeur de cette tension de référence depuis sa valeur prédéterminée z jusqu'à sa valeur nominale, au moment du rétablissement du réseau.

2. Dispositif selon la revendication 1, caractérisé en ce que les moyens pour détecter la valeur limite x de la tension du réseau comprennent un comparateur de référence (CR) dont une première entrée reçoit une fraction de la tension redressée du réseau à travers un premier pont diviseur à résistances ($R_1$, $R_2$), une source électrique de tension continue (V) d'alimentation du comparateur de référence (CR) et du comparateur de commande (CC), un transistor ($Q_1$) fonctionnant soit à l'état bloqué, soit à l'état saturé et passant progressivement de l'état saturé à l'état bloqué, la base de ce transistor étant reliée à une sortie en « collecteur ouvert » du comparateur de référence (CR), l'émetteur de ce transistor ($Q_1$) étant relié à l'entrée de référence (2) du comparateur de commande (CC), son collecteur étant relié à la masse (M), un deuxième pont diviseur ($R_9$, $R_{10}$) étant branché entre la source tension continue (V) et la masse (M), le point commun des résistances ($R_9$, $R_{10}$) du deuxième pont étant relié à une deuxième entrée (8) du comparateur de référence (CR), la valeur des résistances ($R_1$, $R_2$, $R_9$, $R_{10}$) des premier et deuxième ponts diviseurs déterminant la valeur limite x de la tension du réseau au-dessus de laquelle la tension de sortie du comparateur de référence (CR) est à un niveau haut par rapport à la masse (M) et le transistor (Q₁) est bloqué, l'entrée de référence (2) du comparateur de commande (CC) étant également reliée au point commun (7) des résistances (R₇, R₈) d'un troisième pont diviseur branché entre la source de tension continue (V) et la masse, les moyens de détection de la valeur limite x comprenant aussi des moyens de commande de la tension base-collecteur du transistor (Q₁) pour diminuer la valeur du courant circulant dans le troisième pont diviseur (R₇, R₈), lorsque la tension du réseau devient inférieure à la valeur limite x et pour augmenter progressivement la valeur du courant circulant dans ce troisième pont diviseur (R₇, R₈) lorsque la tension du réseau devient supérieure à la valeur limite x jusqu'à ce que la tension de référence atteigne la valeur nominale.

3. Dispositif selon la revendication 2, caractérisé en ce que les moyens de commande du transistor (Q1) comprennent un condensateur (C2) connecté entre la masse de référence (M) et la base du transistor (Q1), une première résistance (R3) reliant la sortie en « collecteur ouvert » du comparateur de référence (CR) avec la base de transistor (Q1) et une deuxième résistance (R₆) reliant l'émetteur du transistor (Q1) avec les bornes communes des résistances du troisième pont diviseur (R₇, R₈), le condensateur (C₂) se déchargeant progressivement dans le « collecteur ouvert », à travers la première résistance (R₃) lorsque la tension du réseau devient inférieure à la valeur limite x, de sorte que le courant circulant dans les résistances du troisième pont diviseur (R₇, R₈) soit dévié progressivement dans la deuxième résistance (R₆), ce condensateur (C₂) se rechargeant progressivement lorsque la tension du réseau devient supérieure à la valeur limite x, de sorte que la valeur du courant dévié dans la deuxième résistance (R₆) diminue et que la valeur du courant augmente dans les résistances du troisième pont diviseur (R₇, R₈).

4. Dispositif selon la revendication 3, caractérisé en ce que la sortie (O) des moyens de stockage (S) est reliée à une entrée du comparateur de référence (CR) par l'intermédiaire d'un quatrième pont diviseur (R₁₂, R₁₃).

5. Dispositif selon la revendication 4, caractérisé en ce que la borne de la résistance (R₇) du troisième pont diviseur (R₇, R₈) qui est reliée à la source de tension continue (V), est reliée à cette source par l'intermédiaire d'une résistance (R₁₁), cette borne étant d'autre part reliée à la masse de référence (M) par l'intermédiaire d'une diode de Zener (Z) permettant de fixer la valeur nominale de la tension de référence.

6. Dispositif selon la revendication 5, caractérisé en ce que la base du transistor (Q₁) est reliée respectivement à la source de tension continue (V) et à la masse de référence (M) par l'intermédiaire de deux résistances (R₄, R₅) qui permettent de fixer la durée de la charge et de la décharge du condensateur (C₂).

**Claims**

1. Device for controlling the regulating means (MR) in a high-power electrical a.c./d.c. converter, said converter comprising, apart from the regulating means connected to the a.c. electrical supply grid, filtering means (F) whereof one input is connected to an output of the regulating means (MR), electrical energy storage means (S) connected to an output of the filtering means (F), the usable regulated voltage being available at the output side of these storage means (S), the control device (D) comprising a regulating control comparator (CC) whereof one input is connected to the output of the storage means (S) and whereof another reference input receives a reference voltage which has a so-called « nominal » value when the converter is supplied normally by the grid, the output of this control comparator (CC) providing an error signal fed to a control input of the regulating means (MR), the said device comprising reference means (R) for supplying the control comparator (CC) with a reference voltage affected by the voltage variations of the grid and increasing progressively at the instant the grid is reestablished after an interruption, characterised in that the reference means (R) are arranged in such a manner that at the instant of the said reestablishment, the voltage at the input of the filtering means (F) is at most equal to the voltage at the output of the storage means (S) and in that these means (R) are formed by means for detecting a limiting value x of the voltage of the electrical grid, for which the regulating means (MR) being at the conduction maximum, the mean output voltage of these regulating means corresponds to a minimum usable output voltage of the converter, below which the converter is no longer usable, after an interruption of the grid, means for lowering the reference voltage to a predetermined value z during the period of an interruption, and then for gradually raising the value of this reference voltage from its predetermined value z to its nominal value at the instant of reestablishment of the grid.

2. Device according to claim 1, characterised in that the means for detecting the limiting value (x) of the grid voltage comprise a reference comparator (CR) whereof a first input receives a fraction of the rectified grid voltage through a first divider bridge comprising resistances (R₁, R₂), an electrical source of direct voltage (V) for supplying the reference comparator (CR) and the control comparator (CC), a transistor (Q₁) operating either in the blocked state or in the saturated state and passing progressively from the saturated state to the blocked state, the base of this transistor being connected to an « open collector » output of the reference comparator (CR), the emitter of this transistor (Q₁) being connected to the reference input (2) of the control comparator (CC), its collector being connected to earth (M), a second divider bridge (R₉, R₁₀) being connected between the source of direct voltage (V) and earth (M), the common point of the resistances ($R_9$, $R_{10}$) of the second bridge being connected to a second input (8) of the reference comparator (CR), the values of the resistances ($R_1$, $R_2$, $R_9$, $R_{10}$) of the first and second divider bridges determining the limiting value (x) of the grid voltage above which the output voltage of the reference comparator (CR) is at a high level with respect to earth (M) and the transistor ($Q_1$) is blocked, the reference input (2) of the control comparator (CC) equally being connected to the common point (7) of the resistances ($R_7$, $R_8$) of a third divider bridge connected between the direct voltage source (V) and earth, the means for detecting the limiting value x also comprising means for controlling the base-collector voltage of the transistor ($Q_1$) in order to reduce the value of the current flowing in the third divider bridge ($R_7$, $R_8$) when the grid voltage drops below the limiting value x and for progressively increasing the value of the current flowing in this third divider bridge ($R_7$, $R_8$) when the grid voltage rises above the limiting value x until the reference voltage reaches the nominal value.

3. Device according to claim 2, characterised in that the control means of the transistor ($Q_1$) comprise a capacitor ($C_2$) connected between the reference earth (M) and the base of the transistor ($Q_1$), a first resistance ($R_3$) connecting the « open collector » output of the reference comparator (CR) to the base of the transistor ($Q_1$) and a second resistance ($R_6$) connecting the emitter of the transistor ($Q_1$) to the common terminals of the resistances of the third divider bridge ($R_7$, $R_8$), the capacitor ($C_2$) being discharged progressively into the « open collector » through the first resistance ($R_3$) when the grid voltage drops below the limiting value x, so that the current flowing in the resistance of the third divider bridge ($R_7$, $R_8$) is deviated progressively into the second resistance ($R_6$), this capacitor ($C_2$) being recharged progressively when the grid voltage rises above the limiting value x, so that the value of the current routed into the second resistance ($R_6$) diminishes and that the value of the current increases in the resistances of the third divider bridge ($R_7$, $R_8$).

4. Device according to claim 3, characterised in that the output (O) of the storage means (S) is connected to an input of the reference comparator (CR) through a fourth divider bridge ($R_{12}$, $R_{13}$).

5. Device according to claim 4, characterised in that the terminal of the resistance ($R_7$) of the third divider bridge ($R_7$, $R_8$) which is connected to the source of direct voltage (V) is connected to this source through a resistance ($R_{11}$), this terminal being connected on the other hand to the reference earth (M) through a Zener diode (Z) making it possible to set the nominal value of the reference voltage.

6. Device according to claim 5, characterised in that the base of the transistor ($Q_1$) is connected, respectively, to the source of direct voltage (V) and to the reference earth (M) through two resistances ($R_4$, $R_5$) which make it possible to set the charge and discharge periods of the capacitor (C2).

**Patentansprüche**

1. Steuervorrichtung für die Regeleinrichtung (MR) in einem elektrischen Wechselstrom-Gleichstrom-Umsetzer hoher Leistung, der außer der an das elektrische Wechselstromnetz angeschlossenen Regeleinrichtung Siebmittel (F), wovon ein Eingang mit einem Ausgang der Regeleinrichtung (MR) verbunden ist, und Mittel (S) zum Speichern von elektrischer Energie umfaßt, die an einen Ausgang der Siebmittel (F) angeschlossen sind, wobei die geregelte Nutzspannung am Ausgang dieser Speichermittel (S) verfügbar ist, wobei die Steuervorrichtung (D) einen Komparator zur Steuerung der Regelung (CC) enthält, wovon ein Eingang mit dem Ausgang der Speichermittel (S) und ein weiterer Eingang, der Referenzeingang, eine Referenzspannung empfängt, die einen sogenannten « Nennwert » aufweist, wenn der Umsetzer aus dem Netz normal gespeist wird, während der Ausgang dieses Steuerkomparators (CC) ein Fehlersignal liefert, das an einen Steuereingang der Regeleinrichtung (MR) angelegt ist, wobei die genannte Vorrichtung Referenzmittel (R) enthält, um dem Steuerkomparator (CC) eine Referenzspannung zuzuführen, die auf Spannungsänderungen des Netzes anspricht und progressiv zunimmt, wenn die Netzversorgung nach einem Ausfall wieder hergestellt ist, dadurch gekennzeichnet, daß diese Referenzmittel (R) derart ausgebildet sind, daß zum Zeitpunkt der genannten Wiederherstellung die Spannung am Eingang der Siebmittel (F) höchstens gleich der Spannung am Ausgang der Speichermittel (S) ist, und daß diese Mittel (R) gebildet sind aus Mitteln zur Erfassung eines Grenzwertes x der Spannung des elektrischen Netzes, für welche, im Zustand maximaler Leitung der Regeleinrichtung (MR), die mittlere Ausgangsspannung dieser Regeleinrichtung einer minimalen nutzbaren Ausgangsspannung des Umsetzers entspricht, unterhalb welcher der Umsetzer nicht mehr verwendbar ist, nachdem ein Netzausfall aufgetreten ist, und Mitteln zum Absenken der Referenzspannung auf einen vorbestimmten Wert z während der Dauer einer Abschaltung und zum anschließenden progressiven Anheben des Wertes dieser Referenzspannung von ihrem vorbestimmten Wert z bis auf ihren Nennwert im Moment der Wiederherstellung der Netzversorgung.

2. Vorrichtung nach Anspruch 1, dadurch gekennzeichnet, daß die Mittel zur Erfassung des Grenzwertes (x) der Netzspannung einen Referenzkomparator (CR) enthalten, wovon ein erster Eingang einen Bruchteil der gleichgerichteten Spannung des Netzes über eine erste Widerstands-Teilerbrücke ($R_1$, $R_2$) empfängt, eine elektrische Gleichstromquelle (V) zur Versorgung des Referenzkomparators (CR) und des Steuerkomparators (CC) enthalten, einen Transistor (Q1) enthalten, der entweder im gesperrten Zustand oder im gesättigten Zustand betrieben wird und progressiv vom gesättigten Zustand in den gesperrten Zustand übergeht, wobei die Basis dieses Transistors mit einem Ausgang des Referenzkomparators (CR) vom Typ « offener Kollektor » verbunden ist, der Emitter dieses Transistors (Q1) mit dem Referenzeingang (2) des Steuerkomparators (CC) und der Kollektor mit Masse (M) verbunden ist, wobei eine zweite Teilerbrücke (R9, R10) zwischen die Gleichspannungsquelle (V) und Masse (M) geschaltet ist, wobei der gemeinsame Punkt der Widerstände (R9, R10) der zweiten Brücke mit einem zweiten Eingang (8) des Referenzkomparators (CR) verbunden ist, wobei ferner der Wert der Widerstände (R1, R2, R9, R10) der ersten und der zweiten Teilerbrücke den Grenzwert (x) der Netzspannung bestimmen, oberhalb welcher die Ausgangsspannung des Referenzkomparators (CR) auf hohem Pegel gegenüber Masse (M) liegt und der Transistor (Q1) gesperrt ist, wobei der Referenzeingang (2) des Steuerkomparators (CC) ferner mit dem gemeinsamen Punkt (7) der Widerstände (R7, R8) einer dritten Teilerbrücke verbunden ist, welche zwischen die Gleichspannungsquelle (V) und Masse geschaltet ist, wobei die Mittel zur Erfassung des Grenzwertes (x) ferner Mittel zur Steuerung der Basis-Kollektor-Spannung des Transistors (Q1) enthalten, um den Wert des Stromes zu vermindern, der in der dritten Teilerbrücke (R7, R8) fließt, wenn die Netzspannung unter den Grenzwert x absinkt, und um den Wert des in dieser dritten Teilerbrücke (R7, R8) fließenden Stromes progressiv zu erhöhen, wenn die Netzspannung größer als der Grenzwert x wird, bis die Referenzspannung den Nennwert erreicht.

3. Vorrichtung nach Anspruch 2, dadurch gekennzeichnet, daß die Steuermittel des Transistors (Q1) einen Kondensator (C2) enthalten, welcher zwischen die Referenzmasse (M) und die Basis des Transistors (Q1) geschaltet ist, wobei ein erster Widerstand (R3) den Ausgang vom Typ « offener Kollektor » des Referenzkomparators (CR) mit der Basis des Transistors (Q1) verbindet und ein zweiter Widerstand (R$_6$) den Emitter des Transistors (Q1) mit den gemeinsamen Anschlüssen der Widerstände der dritten Teilerbrücke (R$_7$, R$_8$) verbindet, wobei ferner der Kondensator (C$_2$) sich progressiv in den « offenen Kollektor » über den ersten Widerstand (R$_3$) entlädt, wenn die Netzspannung unter den Grenzwert x absinkt, so daß der in den Widerständen der dritten Teilerbrücke (R$_7$, R$_8$) fließende Strom progressiv in den zweiten Widerstand (R$_6$) umgeleitet wird, wobei dieser Kondensator (C$_2$) progressiv wieder aufgeladen wird, wenn die Netzspannung größer wird als der Grenzwert x, so daß der Wert des in den zweiten Widerstand (R$_6$) umgelenkten Stromes abnimmt und der Wert des Stromes in den Widerständen der dritten Teilerbrücke (R$_7$, R$_8$) zunimmt.

4. Vorrichtung nach Anspruch 3, dadurch gekennzeichnet, daß der Ausgang (U) der Speichermittel (F) mit einem Eingang des Referenzkomparators (CR) über eine vierte Teilerbrücke (R$_{12}$, R$_{13}$) verbunden ist.

5. Vorrichtung nach Anspruch 4, dadurch gekennzeichnet, daß der Anschluß des Widerstandes (R$_7$) der dritten Teilerbrücke (R$_7$, R$_8$), welcher mit der Gleichspannungsquelle (V) verbunden ist, mit dieser Quelle über einen Widerstand (R$_{11}$) verbunden ist, wobei dieser Anschluß ferner mit der Referenzmasse (M) über eine Zenerdiode (Z) verbunden ist, die es ermöglicht, den Nennwert der Referenzspannung festzulegen.

6. Vorrichtung nach Anspruch 5, dadurch gekennzeichnet, daß die Basis des Transistors (Q1) mit der Gleichspannungsquelle (V) bzw. mit der Referenzmasse (M) über jeweils einen von zwei Widerständen (R$_4$, R$_5$) verbunden ist, die es gestatten, die Ladedauer und die Entladedauer für den Kondensator (C$_2$) festzulegen.

0 055 661